# EUROPÄISCHE PATENTSCHRIFT

(11) **EP 2 446 229 B1**
(45) Veröffentlichungstag und Bekanntmachung des Hinweises auf die Patenterteilung: **12.09.2012**
(21) Anmeldenummer: 10708191.1
(22) Anmeldetag: 10.03.2010
(51) Int. Cl.: G01D 5/347

(54) **ABTASTBAUEINHEIT EINER POSITIONSMESSEINRICHTUNG**
SCANNING UNIT OF A POSITION MEASURING DEVICE
UNITÉ DE BALAYAGE D'UN DISPOSITIF DE MESURE D'UNE POSITION

(30) Priorität: 23.06.2009 DE 102009027107
(43) Veröffentlichungstag der Anmeldung: 02.05.2012
(73) Patentinhaber: Dr. Johannes Heidenhain GmbH, 83301 Traunreut (DE)
(72) Erfinder: MAYER, Reinhard, 83278 Traunstein (DE)
(86) Internationale Anmeldenummer: PCT/EP2010/053031
(87) Internationale Veröffentlichungsnummer: WO 2010/149399

(56) Entgegenhaltungen:
- EP-A2- 2 015 031
- DE-A1- 3 124 723
- DE-A1- 4 340 204
- DE-A1-102007 058 643

## Beschreibung

Die Erfindung betrifft eine Abtastbaueinheit einer Positionsmesseinrichtung nach dem Oberbegriff des Anspruchs 1 sowie eine Positionsmesseinrichtung mit einer derartigen Abtastbaueinheit nach dem Anspruch 11.

Abtastbaueinheiten, dienen zur Abtastung von Messteilungen inkrementaler oder absoluter Art und damit zur Messung von Längen, Wegen sowie Winkeln. Die Positionsmesseinrichtung, bestehend aus der Abtastbaueinheit und einem Messteilungsträger in Form eines Maßstabs, Maßbandes, einer Teilscheibe oder einer Trommel, wird insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie, insbesondere zur Positionierung von Wafern eingesetzt.

Die Anforderungen an Positionsmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau sowie eine einfache und störungssichere Messwertgenerierung vorhanden sein.

Ein kompakter Aufbau bedingt die Integration von elektrischen Bauelementen in der Abtastbaueinheit auf kleinstem Raum. Diese elektrischen Bauelemente erzeugen Wärme, welche einerseits die Bauelemente selbst in negativer Weise beeinflussen, indem die Lebensdauer sinkt. Eine zu hohe Temperatur beeinflusst andererseits auch die Mechanik der Abtastbaueinheit negativ, indem sich Bauteile der Abtastbaueinheit undefiniert ausdehnen. Dies führt zu mechanischen Spannungen, was zu Rissen in Bauelementen, zu Verlagerungen von Bauelementen und letztendlich zu Messungenauigkeiten führen kann.

Diese Probleme, hervorgerufen durch die Wärmeerzeugung der elektrischen Bauelemente der Abtastbaueinheit, werden verschärft, wenn die Abtastbaueinheit im Vakuum betrieben wird. Im Vakuum erfolgt nämlich keine Konvektion der Wärme.

Die DE 10 2007 058 643 A1 zeigt eine Positionsmesseinrichtung mit einer Abtastbaueinheit, bei der die Wärme eines wärmeerzeugenden elektrischen Bauelementes mittels eines Wärmeleitelementes zu einem Kontaktelement geleitet wird. Dieses Kontaktelement tritt beim Anbau der Abtastbaueinheit an ein zu messendes Objekt mit einer Fläche dieses zu messenden Objektes in innigen Kontakt und die Wärme wird damit in dieses zu messende Objekt abgeführt.

Als Wärmeleitelement ist eine elastische und elektrisch isolierende Wärmeleitfolie, insbesondere Polymerfolie, die auch als Softtherm-Folie angeboten wird, angegeben. Der Nachteil dabei ist, dass derartige Wärmeleitfolien nicht vakuumtauglich sind.

Der Erfindung liegt die Aufgabe zugrunde, eine Abtastbaueinheit anzugeben, mit der eine hohe Messgenauigkeit erreichbar ist und die vakuumtauglich ist.

Diese Aufgabe wird erfindungsgemäß durch die Merkmale des Anspruchs 1 gelöst.

Demnach ist eine Abtastbaueinheit einer Positionsmesseinrichtung besonders dazu ausgebildet, um die von einem wärmeerzeugenden elektrischen Bauelement generierte Wärme zu einem Grundkörper, der als Wärmesenke fungiert, weiterzuleiten. Hierzu umfasst die Abtastbaueinheit
- einen Trägerkörper, welcher zumindest ein wärmeerzeugendes elektrisches Bauelement aufweist;
- den Grundkörper, an dem der Trägerkörper befestigt ist, und
- ein Mittel zur Ausbildung eines Wärmeleitpfads vom Trägerkörper zum Grundkörper, wobei
- dieses Mittel ein auf dem Trägerkörper aufgebrachtes Lotmaterial umfasst, und
- ein Druckelement vorgesehen ist, das dazu ausgelegt ist, das Lotmaterial und den Grundkörper oder das Lotmaterial und ein mit dem Grundkörper verbundenes Zwischenelement aneinander zu drängen.

Das wärmeerzeugende elektrische Bauelement ist bei einer lichtelektrischen Positionsmesseinrichtung insbesondere die Lichtquelle, die in den Trägerkörper derart eingelötet ist, dass die Verlustwärme über Lotmaterial vom Gehäuse der Lichtquelle ausgehend zum Trägerkörper abtransportiert wird.

Um die nun in den Trägerkörper eingebrachte Wärme weiter zur Wärmesenke zu leiten, ist auf Lötpads des Trägerkörpers Lotmaterial durch Aufschmelzen aufgebracht. Dieses Lotmaterial wird durch Kraftschluss bzw. Klemmen mit dem Grundkörper verbunden. Die dadurch auf das Lotmaterial einwirkende Druckkraft bewirkt eine Flächenpressung des Lotmaterials und dadurch eine optimale Anpassung an das Gegenstück, das direkt der Grundkörper sein kann oder ein Zwischenelement, das mit dem Grundkörper gut wärmeleitend verbunden ist.

Zur Vermeidung von undefinierten mechanischen Verspannungen insbesondere des Trägerkörpers, ist der Trägerkörper am Grundkörper derart kraftschlüssig gehalten, dass eine möglichst kräfterückwirkungsfreie Verschiebung des Trägerkörpers gegenüber dem Grundkörper ermöglicht ist.

Eine derartige Verschiebung wird hervorgerufen durch unterschiedliche temperaturbedingte Ausdehnungen von Trägerkörper und Grundkörper aufgrund unterschiedlicher Ausdehnungskoeffizienten und / oder Temperaturgradienten. Besonders vorteilhaft ist es, wenn der Trägerkörper ausschließlich an einer Position (bezogen in Messrichtung X) am Grundkörper unverschiebbar und an zumindest einer weiteren Position verschiebbar gehalten ist.

An der Position, an welcher der Trägerkörper verschiebbar am Grundkörper gehalten ist, wird das Druckelement aus einer Anordnung aus einer Schraube und einem Federelement gebildet, um das Aneinanderdrängen von Lotmaterial und Grundkörper bzw. Lotmaterial und Zwischenelement nachgiebig federnd auszugestalten.

In abhängigen Ansprüchen sind weitere vorteilhafte Ausgestaltungen der Erfindung angegeben.

Ein Lötpad ist eine elektrisch leitende Kontaktfläche, insbesondere eine Schicht aus elektrisch leitendem Material auf dem Trägerkörper, der aus elektrisch nicht leitendem Material aber gut Wärme leitendem Material, insbesondere aus Keramik, besteht.

Lotmaterial ist eine Metalllegierung, die aus einer Mischung von Metallen besteht, insbesondere Blei, Zinn, Silber und Kupfer. Das Lot erstarrt nach einem Schmelzvorgang. Für die Erfindung eignet sich besonders Weichlot, insbesondere Zinnlot, da es sich durch seine Nachgiebigkeit im erstarrten Zustand besonders gut an das Zwischenelement, bzw. den Grundkörper selbst anschmiegt und einen guten flächigen Kontakt ergibt, woraus ein geringer Wärmeübergangswiderstand resultiert.

Die Erfindung wird mit Hilfe von Ausführungsbeispielen näher erläutert.

Dabei zeigt
- Figur 1: eine perspektivische Ansicht einer Längenmesseinrichtung mit einer Abtastbaueinheit und einem Maßstab;
- Figur 2: eine perspektivische Ansicht der Abtastbaueinheit der Längenmesseinrichtung gemäß Figur 1 mit abgenommenem Deckel;
- Figur 3: einen Querschnitt III - III der Abtastbaueinheit gemäß Figur 2;
- Figur 4: eine Draufsicht der Leiterplatte der Abtastbaueinheit gemäß Figur 2;
- Figur 5: einen Querschnitt eines zweiten Ausführungsbeispiels einer Abtastbaueinheit, und
- Figur 6: eine Draufsicht auf eine Abtastbaueinheit eines dritten Ausführungsbeispiels.

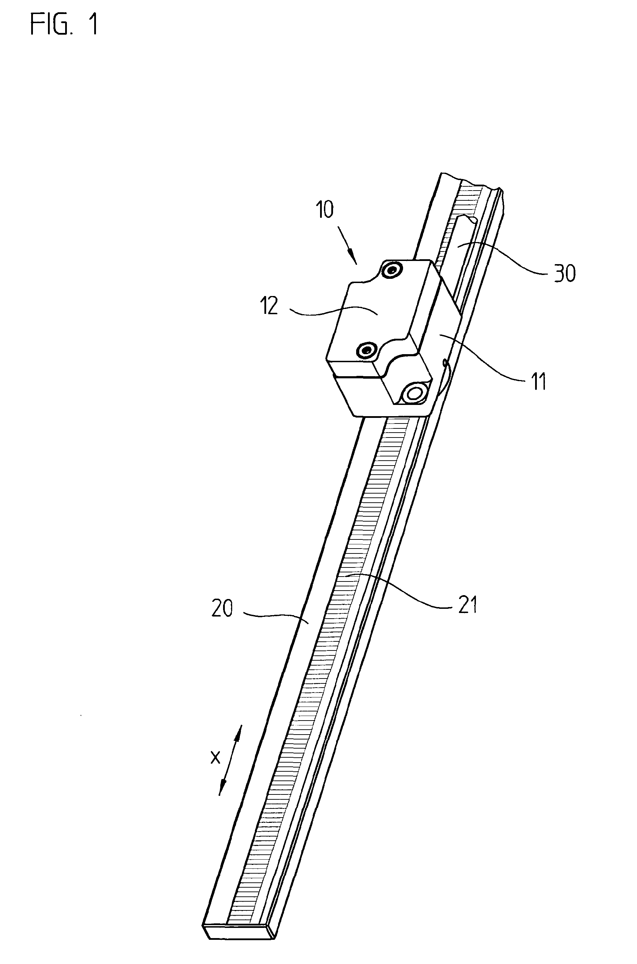

Die Figuren 1 bis 4 zeigen verschiedene Ansichten und Details eines ersten Ausführungsbeispiels der Erfindung. Die Erfindung wird anhand der Figuren 1 bis 4 am Beispiel einer optischen Längenmesseinrichtung erläutert, mit der die Relativlage zweier in Messrichtung X gegeneinander verschiebbarer Objekte gemessen werden soll.

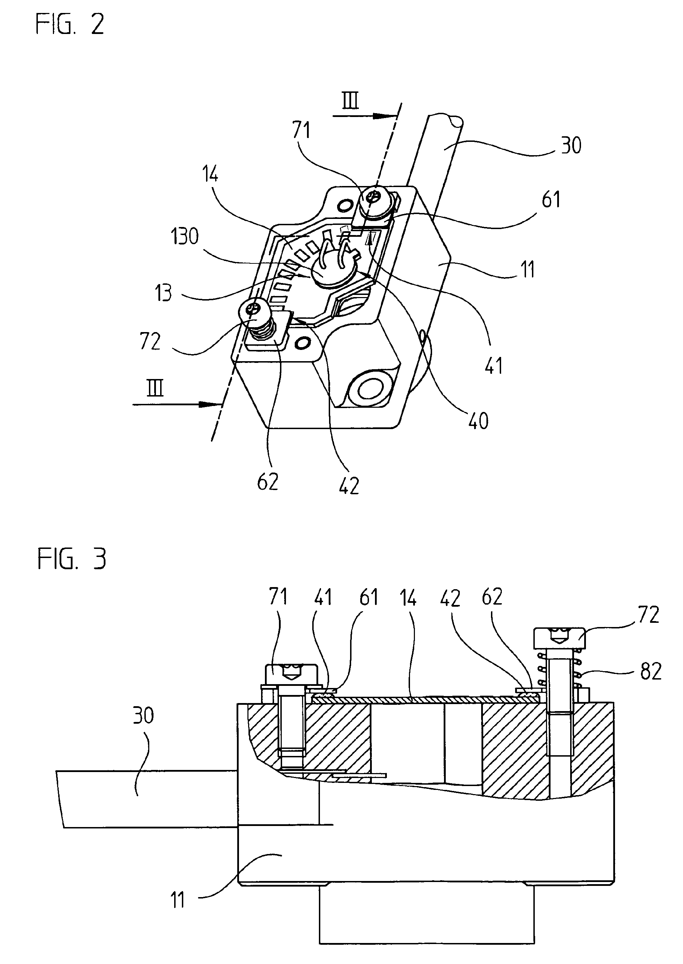

Figur 1 zeigt eine Positionsmesseinrichtung, bestehend aus einer Abtastbaueinheit 10 und einen Maßstab 20. Die Abtastbaueinheit 10 wird zur Positionsmessung zweier relativ zueinander beweglicher Bauteile an eines dieser Bauteile montiert und der Maßstab 20 an das andere dieser Bauteile. Die Abtastbaueinheit 10 besteht aus einem Grundkörper 11, der einen Innenraum für Abtastbauelemente, insbesondere für elektrische Bauelemente, bildet und von einem Deckel 12 verschlossen ist. Als eines dieser elektrischen Bauelemente ist in Figur 2 eine Lichtquelle 13 dargestellt. Bei der Positionsmessung wird eine Messteilung 21 des Maßstabs 20 von der relativ zum Maßstab 20 in Messrichtung X bewegbaren Abtastbaueinheit 10 abgetastet. Dazu umfasst die Abtastbaueinheit 10 die Lichtquelle 13 (in Figur 2 dargestellt), die ein Lichtbündel aussendet, welches auf den Maßstab 20 trifft, dort reflektiert wird und zurück zur Abtastbaueinheit 10 verläuft und schließlich auf lichtempfindliche Abtastsensoren trifft. Das Lichtbündel wird dabei von der Messteilung 21 am Maßstab 20 positionsabhängig moduliert und die Abtastsensoren liefern positionsabhängige Abtastsignale, die über ein Anschlusskabel 30 nach außen geführt werden.

Figur 2 zeigt nun eine perspektivische Ansicht der Abtastbaueinheit 10. Zur besseren Erläuterung des Aufbaus der Abtastbaueinheit 10 ist die Abtastbaueinheit 10 mit abgenommenem Deckel 12 dargestellt. Die Abtastbaueinheit 10 weist einen Trägerkörper 14 auf, an dem die elektrischen Bauelemente 13 montiert sind. Dieser Trägerkörper 14 ist wiederum am Grundkörper 11 befestigt.

Bei dieser Abtastbaueinheit 10 ist die Lichtquelle 13 das elektrische Bauelement, das die größte Wärme erzeugt, weshalb auch nur diese dargestellt wird und deren Wärmeableitung näher erläutert wird. Zur Ableitung dieser Wärme sind besondere konstruktive Maßnahmen getroffen worden, die nachfolgend anhand der Figuren 2 bis 4 weiter erläutert werden.

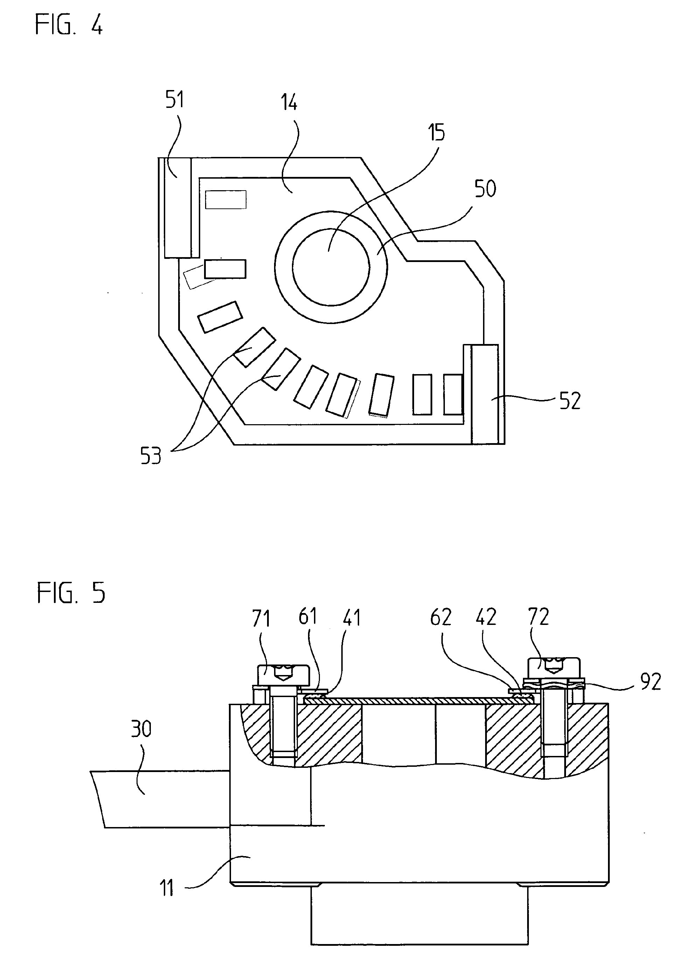

Wie insbesondere in den Figuren 2 und 4 dargestellt ist, befindet sich die Lichtquelle 13 in einer Ausnehmung 15 in Form einer Durchgangsbohrung des Trägerkörpers 14 und ist darin durch Löten befestigt. Ein Lotmaterial 40 kontaktiert einerseits das Gehäuse 130 der Lichtquelle 13 möglichst großflächig und andererseits den Trägerkörper 14. Diese Lötung bewirkt eine mechanische Verbindung des Gehäuses 130 der Lichtquelle 13 mit dem Trägerkörper 14 und bildet gleichzeitig über das Lotmaterial 40 einen Wärmeleitpfad von der Lichtquelle 13 zum Trägerkörper 14. Zur Bildung dieses Wärmeleitpfads ist auf dem Trägerkörper 14 um die Ausnehmung 15 herum ein Lötpad 50 vorgesehen, auf dem das Lotmaterial 40 aufgebracht ist.

Die von der Lichtquelle 13 in den Trägerkörper 11 eingebrachte Wärme muss nun weitergeleitet werden. Um diese Weiterleitung möglichst verlustfrei zu ermöglichen, wird für den Trägerkörper 14 ein gut wärmeleitendes Material gewählt. Der Trägerkörper ist deshalb vorzugsweise eine Leiterplatte aus Keramikmaterial, insbesondere Aluminiumoxidkeramik.

Zur Weiterleitung der Wärme sind nun Mittel zur Ausbildung eines Wärmeleitpfades von dem Trägerkörper 14 zum Grundkörper 11 vorgesehen. Diese Mittel umfassen einerseits Lotmaterial 41, 42 auf dem Trägerkörper 14 und andererseits ein Zwischenelement 61, 62, welches dieses Lotmaterial 41, 42 kontaktiert.

Die Verwendung von Lotmaterial 41, 42 auf dem Trägerkörper 14 ist besonders vorteilhaft, da auf dem Trägerkörper 14 zur elektrischen Kontaktierung von elektrischen Bauelementen sowieso eine Anordnung von mehreren Lötpads 53 vorgesehen ist. Einige Lötpads 53 werden nun zum Anlöten - zum Zweck der elektrischen Kontaktierung - von elektrischen Bauelementen oder Leitungen genutzt und zumindest eines dieser Lötpads 51, 52 wird zur Ausbildung des Wärmeleitpfads genutzt. Aus Gründen der Übersichtlichkeit sind die elektrischen Bauelemente, welche auf die Lötpads 53 gesetzt werden, nicht dargestellt.

Das Lotmaterial 41, 42 wird im dargestellten Beispiel mit dem Grundkörper 11 mittels eines Zwischenelementes 61, 62 wärmeleitend verbunden, welches einerseits an das Lotmaterial 61, 62 gedrängt ist und andererseits mit dem Grundkörper 11 wärmeleitend in Kontakt steht. Dieses Aneinanderdrängen des Lotmaterials 41 und des Zwischenelementes 61 wird durch ein Druckelement in Form einer Schraube 71 realisiert, und das Aneinanderdrängen des Lotmaterials 42 und des Zwischenelementes 62 wird durch ein Druckelement in Form einer Kombination aus Schraube 72 und Feder 82 realisiert.

Der Wärmeleitpfad ist derart ausgestaltet, dass er gleichzeitig auch die mechanische Befestigung des Trägerkörpers 14 am Grundkörper 11 durch Kraftschluss bildet. Hierzu ist der Trägerkörper 14 an nur einer Stelle am Grundkörper 11 unverschiebbar befestigt und an zumindest einer weiteren Stelle verschiebbar befestigt. In Figur 3 ist die unverschiebbare Befestigungsstelle auf der linken Seite und die verschiebbare Befestigungsstelle auf der rechten Seite dargestellt.

Die unverschiebbare Befestigungsstelle wird von der Schraube 71 gebildet, welche das Zwischenelement 61 fest auf das Lotmaterial 41 des Trägerkörpers 14 drängt.

Die verschiebbare Befestigungsstelle wird mit Hilfe der Schraube 72 gebildet, welche das Zwischenelement 62 federnd auf das Lotmaterial 42 des Trägerkörpers 14 drängt. Die federnde Funktion wird durch die Feder in Form einer Spiralfeder 82 erreicht.

Alternativ zu der Spiralfeder 82 kann eine Wellscheibe 92 eingesetzt werden, wie in Figur 5 dargestellt ist. Da in Figur 5 die übrigen Bauteile unverändert sind, wurden für gleiche Bauteile die Bezugszeichen des ersten Ausführungsbeispiels übernommen.

Die verschiebbare Befestigungsstelle P2 ermöglicht eine temperaturbedingte Ausdehnung und somit Verschiebung des Trägerkörpers 14 relativ zum Grundkörper 11. Diese Verschiebbarkeit ist besonders vorteilhaft, da der Grundkörper 11 aus einem anderen Material als der Trägerkörper 14 besteht und daher bei Temperaturänderungen eine gegenseitige Verlagerung erfolgt, die durch das federnde Druckelement 72, 82 bzw. 72, 92 relativ rückwirkungskräftefrei zwischen dem Trägerkörper 14 und dem Grundkörper 11 erfolgen kann.

Das Lotmaterial 41, 42 zur Ausbildung des Wärmeleitpfades von der Leiterplatte 14 zum Grundkörper 11 ist in den dargestellten Beispielen auf der Oberseite der Leiterplatte 14 angeordnet. Zusätzlich oder alternativ kann ein derartiges Lotmaterial 41, 42 auch auf der Unterseite der Leiterplatte 14 aufgebracht sein, das mittels der Schraube 71, 72 mit dem Grundkörper kraftschlüssig verbunden ist, so dass das Lotmaterial direkt den Grundkörper kontaktiert und daran gedrängt ist.

Das Lotmaterial 41, 42 ist eine Metalllegierung, die aus einer Mischung von Metallen besteht, insbesondere aus Blei, Zinn, Silber und Kupfer. Das Lotmaterial 41, 42 erstarrt nach einem Schmelzvorgang. Bei der Erfindung wird die Nachgiebigkeit des aufgeschmolzenen und erstarrten Lotmaterials 41, 42 ausgenutzt. Das Druckelement 71, 72, ggf. in Verbindung mit einer Feder 82, 92, bewirkt eine Druckkraft auf das Lotmaterial 41, 42, welche dieses plastisch verformt und dadurch einen ideale flächige Kontaktfläche ausbildet, die einen äußerst geringen Wärmeübergangswiderstand aufweist. Das Lotmaterial 41, 42 wandert auseinander und passt sich dem anlegenden Bauteil an, wobei dieses Bauteil das Zwischenelement 61, 62 oder direkt der Grundkörper 11 sein kann. Für die Erfindung eignet sich besonders Weichlot, insbesondere Zinnlot, da es sich durch seine Nachgiebigkeit im erstarrten Zustand besonders gut an das Zwischenelement 61, 62, bzw. an den Grundkörper 11 selbst anschmiegt und einen guten flächigen Kontakt ergibt, woraus ein geringer Wärmeübergangswiderstand resultiert.

Durch die genannten Maßnahmen wird ein Wärmeleitpfad von dem Gehäuse 130 der Lichtquelle 13 ausgehend über das Lotmaterial 40 zum Trägerkörper 14 geschaffen, dann weiter über den besonders gut wärmeleitenden Trägerkörper 14 zu den Lötpads 51 und 52 und zu dem Lotmaterial 41, 42, dann weiter über die gut wärmeleitend ausgebildeten Zwischenelemente 61, 62, ggf. unter Mitwirkung der Druckelemente 71, 72, zu dem Grundkörper 11.

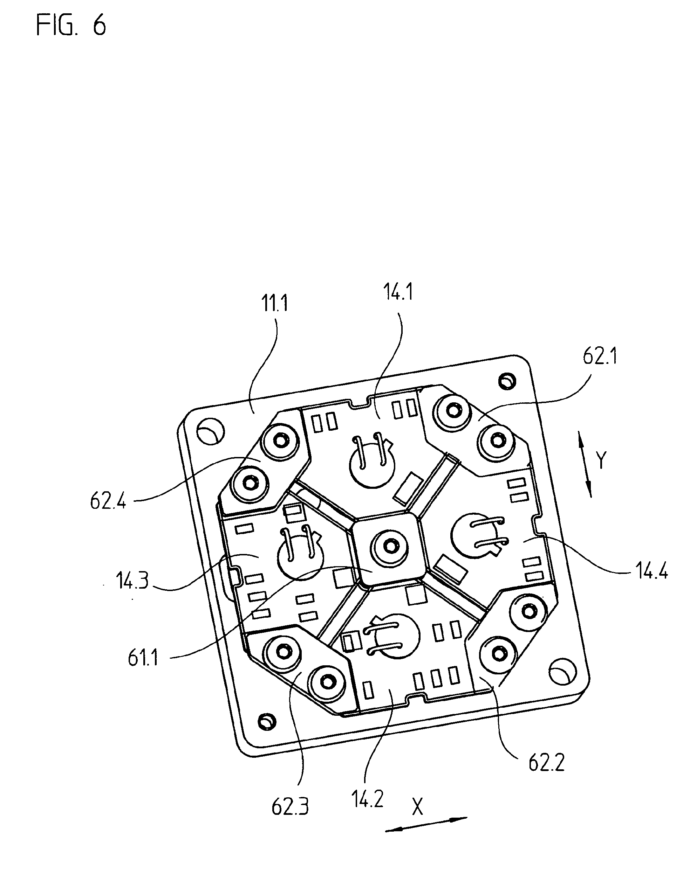

Figur 6 zeigt eine Abtastbaueinheit 10.1 zur Abtastung einer zweidimensionalen Messteilung, auch Kreuzgitter genannt. Für jede der beiden Messrichtungen X und Y sind jeweils zwei Trägerkörper 14.1, 14.2, 14.3, 14.4 vorgesehen, nämlich für die Messrichtung X der Trägerkörper 14.1 und der Trägerkörper 14.2 sowie für die Messrichtung Y der Trägerkörper 14.3 und der Trägerkörper 14.4. Alle vier Trägerkörper 14.1 bis 14.4 sind derart ausgebildet und angeordnet, dass sie mittels eines gemeinsamen Zwischenelementes 61.1 am Grundkörper 11.1 unverschiebbar befestigt werden können und mit weiteren Zwischenelementen 62.1, 62.2, 62.3, 62.4 verschiebbar am Grundkörper 11.1 befestigt werden können. Die Befestigung und die Ausbildung des Wärmeleitpfads erfolgt analog zum ersten Ausführungsbeispiel.

## Patentansprüche

1. Abtastbaueinheit einer Positionsmesseinrichtung zur Abtastung einer Messteilung (21), mit
- einem Trägerkörper (14), welcher zumindest ein wärmeerzeugendes elektrisches Bauelement (13) aufweist;
- einem Grundkörper (11), an dem der Trägerkörper (14) gehaltert ist, und
- ein Mittel zur Ausbildung eines Wärmeleitpfads vom Trägerkörper (14) zum Grundkörper (11), **dadurch gekennzeichnet, dass**
- dieses Mittel ein auf dem Trägerkörper (14) aufgebrachtes Lotmaterial (41, 42) umfasst, und
- ein Druckelement (71, 72, 82, 92) vorgesehen ist, das dazu ausgelegt ist, das Lotmaterial (41, 42) und den Grundkörper (11) oder das Lotmaterial (41, 42) und ein mit dem Grundkörper (11) verbundenes Zwischenelement (61, 62) aneinander zu drängen.

2. Abtastbaueinheit nach Anspruch 1, **dadurch gekennzeichnet, dass** das Druckelement (71, 72, 82, 92) derart ausgestaltet ist, dass es den Trägerkörper (14) am Grundkörper (11) derart kraftschlüssig hält, dass eine temperaturbedingte Ausdehnung des Trägerkörpers (14) gegenüber dem Grundkörper (11) ermöglicht ist.

3. Abtastbaueinheit nach Anspruch 2, **dadurch gekennzeichnet, dass** der Trägerkörper (14) ausschließlich an einer Position am Grundkörper (11) unverschiebbar gehalten ist und an zumindest einer weiteren Position verschiebbar gehalten ist, wobei die verschiebbare Halterung durch ein federndes Aneinanderdrängen des Lotmaterials (42) und des Grundkörpers (11) oder des Lotmaterials (42) und des Zwischenelementes (62) ausgebildet ist.

4. Abtastbaueinheit nach einem der vorhergehenden Ansprüche, **dadurch gekennzeichnet, dass** das Druckelement eine Anordnung aus einer Schraube (72) und einem Federelement (82) umfasst.

5. Abtastbaueinheit nach einem der vorhergehenden Ansprüche, **dadurch gekennzeichnet, dass** das wärmeerzeugende elektrische Bauelement eine Lichtquelle (13) ist.

6. Abtastbaueinheit nach Anspruch 5, **dadurch gekennzeichnet, dass** das Gehäuse (130) der Lichtquelle (13) mit dem Trägerkörper (14) mittels Lotmaterial (40) verbunden ist, so dass das Lotmaterial (40) einen Wärmeübergang zwischen dem Gehäuse (130) und dem Trägerkörper (14) ermöglicht.

7. Abtastbaueinheit nach Anspruch 6, **dadurch gekennzeichnet, dass** die Lichtquelle (13) in einer Ausnehmung (15) des Trägerkörpers (14) angeordnet ist.

8. Abtastbaueinheit nach einem der vorhergehenden Ansprüche, **dadurch gekennzeichnet, dass** der Trägerkörper (14) eine Leiterplatte ist.

9. Abtastbaueinheit nach Anspruch 8, **dadurch gekennzeichnet, dass** die Leiterplatte (14) aus Keramik besteht.

10. Abtastbaueinheit nach einem der vorhergehenden Ansprüche, **dadurch gekennzeichnet, dass** auf dem Trägerkörper (14) eine Anordnung von mehreren Lötpads (50, 51, 52, 53) vorgesehen ist, wobei mehrere dieser Lötpads (53) zum Anlöten elektrischer Bauelemente oder Leitungen genutzt sind und zumindest ein weiteres dieser Lötpads (51, 52) mit dem Lotmaterial (41, 42) zur Ausbildung des Wärmeleitpfads vom Trägerkörper (14) zum Grundkörper (11) versehen ist.

11. Positionsmesseinrichtung mit einem Maßstab (20) und einer Abtastbaueinheit (10) nach einem der vorhergehenden Ansprüche.

## Claims

1. Scanning unit of a position measuring device for scanning a measuring graduation (21), having
- a carrier body (14) having at least one heat-generating electrical component (13);
- a base body (11) on which the carrier body (14) is retained, and
- a means for configuring a heat conducting path from the carrier body (14) to the base body (11), **characterized in that**
- this means comprises a solder material (41, 42) applied to the carrier body (14) and
- a pressure element (71, 72, 82, 92) is provided which is configured to force the solder material (41, 42) and the base body (11), or the solder material (41, 42) and an intermediate element (61, 62) connected to the base body (11), against each other.

2. Scanning unit according to Claim 1, **characterized in that** the pressure element (71, 72, 82, 92) is configured such that it holds the carrier body (14) on the base body (11) in a force-fitting manner such that a temperature-related expansion of the carrier body (14) with respect to the base body (11) is made possible.

3. Scanning unit according to Claim 2, **characterized in that** the carrier body (14) is held immovably only at one position on the base body (11) and is held displaceably at at least one other position, wherein the displaceable retention is configured by a resilient forcing-together of the solder material (42) and the base body (11), or of the solder material (42) and the intermediate element (62).

4. Scanning unit according to one of the preceding claims, **characterized in that** the pressure element comprises an arrangement of a screw (72) and a spring element (82).

5. Scanning unit according to one of the preceding claims, **characterized in that** the heat-generating electrical component is a light source (13).

6. Scanning unit according to Claim 5, **characterized in that** the housing (130) of the light source (13) is connected to the carrier body (14) using solder material (40), such that the solder material (40) enables heat transfer between the housing (130) and the carrier body (14).

7. Scanning unit according to Claim 6, **characterized in that** the light source (13) is arranged in a cutout (15) of the carrier body (14).

8. Scanning unit according to one of the preceding claims, **characterized in that** the carrier body (14) is a printed circuit board.

9. Scanning unit according to Claim 8, **characterized in that** the printed circuit board (14) is composed of ceramic.

10. Scanning unit according to one of the preceding claims, **characterized in that** an arrangement of a plurality of soldering pads (50, 51, 52, 53) is provided on the carrier body (14), wherein a plurality of these soldering pads (53) are used to solder on electrical components or lines, and at least one other of these soldering pads (51, 52) is provided with the solder material (41, 42) for forming the heat conducting path from the carrier body (14) to the base body (11).

11. Position measuring device with a scale (20) and a scanning unit (10) according to one of the preceding claims.

## Revendications

1. Unité de balayage d'un dispositif de mesure de position pour le balayage d'une graduation de mesure (21), avec
- une pièce de support (14) comportant au moins un composant électrique (13) produisant de la chaleur ;
- une pièce d'embase (11) maintenant la pièce de support (14), et
- un moyen pour la formation d'un chemin conducteur de chaleur depuis la pièce de support (14) jusqu'à la pièce d'embase (11), **caractérisée en ce que**
- ce moyen comporte un matériau de brasure (41, 42) déposé sur la pièce de support (14), et **en ce que**
- un élément de pression (71, 72, 82, 92) est prévu pour pousser l'un contre l'autre le matériau de brasure (41, 42) et la pièce d'embase (11) ou le matériau de brasure (41, 42) et un élément intermédiaire (61, 62) relié à la pièce d'embase (11).

2. Unité de balayage selon la revendication 1, **caractérisée en ce que** l'élément de pression (71, 72, 82, 92) est arrangé de manière à maintenir en pression la pièce de support (14) contre la pièce d'embase (11) pour permettre une dilatation provoquée par la température de la pièce de support (14) vis-à-vis de la pièce d'embase (11).

3. Unité de balayage selon la revendication 2, **caractérisée en ce que** la pièce de support (14) est maintenue sur la pièce d'embase (11) exclusivement dans une position ne permettant aucun coulissement et maintenue au moins dans une autre position permettant le coulissement, la fixation permettant le coulissement étant conçue pour pousser l'un contre l'autre au moyen d'un ressort, le matériau de brasure (42) et la pièce d'embase (11) ou le matériau de brasure (42) et l'élément intermédiaire (62).

4. Unité de balayage selon une des revendications précédentes, **caractérisée en ce que** l'élément de pression comporte un agencement constitué d'une vis (72) et d'un élément à ressort (82).

5. Unité de balayage selon une des revendications précédentes, **caractérisée en ce que** le composant électrique produisant de la chaleur est une source lumineuse (13).

6. Unité de balayage selon la revendication 5, **caractérisée en ce que** le boîtier (130) de la source lumineuse (13) est relié à la pièce de support (14) au moyen de matériau de brasure (40) de manière à permettre au matériau de brasure (40) d'assurer un passage de chaleur entre le boîtier (130) et la pièce de support (14).

7. Unité de balayage selon la revendication 6, **caractérisée en ce que** la source lumineuse (13) est disposée dans une cavité (15) de la pièce de support (14).

8. Unité de balayage selon une des revendications précédentes, **caractérisée en ce que** la pièce de support (14) est un circuit imprimé.

9. Unité de balayage selon la revendication 8, **caractérisée en ce que** le circuit imprimé (14) est constitué de céramique.

10. Unité de balayage selon une des revendications précédentes, **caractérisée en ce qu'**un agencement de plusieurs plots de brasure (50, 51, 52, 53) est prévu sur la pièce de support (14), plusieurs de ces plots de brasure (53) étant utilisés pour la brasure de composants électriques ou de fils et au moins un autre de ces plots de brasure (51, 52) étant garni du matériau de brasure (41, 42) pour la formation du chemin conducteur de chaleur depuis la pièce de support (14) jusqu'à la pièce d'embase (11).

11. Dispositif de mesure de position avec une graduation (20) et une unité de balayage (10) selon une des revendications précédentes.
